(19) Europäisches Patentamt / European Patent Office / Office européen des brevets

(11) **EP 2 405 549 A1**

(12) **EUROPÄISCHE PATENTANMELDUNG**

(43) Veröffentlichungstag:
**11.01.2012  Patentblatt 2012/02**

(51) Int Cl.:
*H02G 5/00* *(2006.01)*

(21) Anmeldenummer: **10169067.5**

(22) Anmeldetag: **09.07.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **ABB Technology AG**
**8050 Zürich (CH)**

(72) Erfinder:
• **Sologuren-Sanchez, Diego**
  **CH-5430 Wettingen (CH)**
• **Bolli, Tilo**
  **CH-3658 Merligen (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(54) **Gasisolierte Schaltanlage**

(57) Die Offenbarung betrifft eine gasisolierte Schaltanlage (1) mit mindestens einer Sammelschiene, die eine axiale Richtung (X) definiert und eine mindestens einen Nominalleiter umgebende Kapselung (3, 103) umfasst. Die Kapselung umfasst mindestens ein Paar von axial benachbarten Modulen (10a, 10b, 10c), welche über eine Kompensationseinheit (20a, 20b, 20c) miteinander verbunden sind. Das Paar von Modulen (10a, 10b, 10c) ist von mindestens einem sich in axialer Richtung erstreckenden Zuganker (30a, 30b, 30c), der an einem ersten Befestigungspunkt (32a, 32b, 32c) des ersten Moduls und am zweiten Befestigungspunkt (34b, 34c) des zweiten Moduls befestigt. Eine thermische Veränderung einer Länge (F1, F2) in axialer Richtung des mindestens einen Zugankers zwischen dem ersten Befestigungspunkt (32a, 32b, 32c, 132a, 132c) und dem zweiten Befestigungspunkt (34a, 34b, 134a), eine thermische Veränderung in axialer Richtung der Entfernung (A, A1, A3) zwischen dem ersten Befestigungspunkt (32a, 32b, 32c, 132a, 132c) des ersten Moduls (10a, 10b, 110a) und dem ersten Referenzpunkt (12a, 12b, 112a), und eine thermische Veränderung in axialer Richtung der Entfernung (A, A2, A4) zwischen dem zweiten Befestigungspunkt (34a, 34b, 134a) des zweiten Moduls (10b, 10c, 110b) und dem zweiten Referenzpunkt (12b, 12c, 112a) sich zumindest teilweise ausgleichen, so dass sich der Modulabstand bei einer Erwärmung oder Abkühlung der Kapselung sich weniger als um einen vorbestimmten Betrag in axialer Richtung verändert.

Fig. 1

EP 2 405 549 A1

**Beschreibung**

Die Erfindung betrifft eine gasisolierte Schaltanlage, insbesondere zur Übertragung von Primärleistungen im Mittel- und/oder Hochspannungsbereich.

Gasisolierte Schaltanlagen (GIS) umfassen typischerweise mehrere Schalter, welche über sogenannte Sammelschienen zur Übertragung einer elektrischen Primärleistung miteinander elektrisch verbunden sind. Aus dem Stand der Technik sind sowohl einphasig gekapselte, wie auch mehrphasig gekapselte Sammelschienen bekannt. Unter einer einphasigen Sammelschiene wird gemeinhin ein Primärleiter verstanden, welcher mittels eines Isolationsgases in einer eigenen Kapselung in Form eines metallgekapselten Gehäuses angeordnet ist. Im Unterschied zur einphasig gekapselten Sammelschiene sind bei der mehrphasig - beispielsweise dreiphasig - gekapselten Sammelschiene die Primärleiter verschiedener elektrischer Phasen gemeinsam in einem einzigen metallgekapselten Gehäuses angeordnet.

Je nach Ausführungsform der GIS, beispielsweise in Form einer Hochspannungsanlage, sind die Schalter in verschiedenen Schaltfeldern angeordnet. Mehrere Schaltfelder sind über ein-oder mehrphasig gekapselte Sammelschienen miteinander verbunden. Zugunsten der Kompaktheit der GIS erstreckt sich die Sammelschiene meist quer zu den Schaltfeldern. Bei einem verbreiteten Anlagenkonzept der GIS umfasst jedes Schaltfeld einen sich in axialer Richtung erstreckenden Längsabschnitt der Sammelschiene oder der Sammelschienen, wobei die axiale Richtung von der zylinderförmigen Sammelschiene definiert wird. Derartige Sammelschienenabschnitte werden auch als Sammelschienenmodule bezeichnet. Die Kapselung der Sammelschienenmodule weist dabei mindestens eine quer zur axialen Richtung verlaufende Abzweigung pro Schaltfeld auf, durch welche pro Phase ein Verbindungsleiter zum jeweiligen Leistungsschalter führt.

Die Sammelschienenmodule sind dabei über die Schaltfelder fest mit einem Fundament verbunden. Anders formuliert sind die Schaltfelder mit ihren Sammelschienenmodulen in einem festen Abstand zueinander angeordnet. Zwischen den Sammelschienenmodulen einer Sammelschiene ist je nach Ausführungsform je eine Kompensationseinheit angeordnet, die eine thermische Ausdehnung von einzelnen Modulen der Sammelschiene relativ zueinander ausgleicht. Um die thermische Ausdehnung von einzelnen Modulen relativ zueinander zu ermöglichen, ist die Kapselung der Sammelschiene im Bereich der Kompensationseinheiten lokal, aber dennoch gasdicht unterbrochen. Oftmals wird dies durch zwei ineinander schiebbare Rohrabschnitte erreicht, welche an einem ihrer Enden zur mechanischen Befestigung der benachbarten Kompensationseinheiten je einen Flanschabschnitt aufweisen, so dass ein in axialer Richtung beweglicher Kapselungsabschnitt entsteht. Die Kompensationseinheiten weisen also eine variable Länge in axialer Richtung auf. Weiter steht das Isolationsgas in den Kompensationseinheiten und in den Sammelschienenmodulen unter einem vorbestimmten Gasdruck. Bei einer Erwärmung der aus Sammelschienenmodulen und Kompensationseinheiten aufgebauten Sammelschiene dehnen sich die Kapselungsabschnitte der Sammelschienenmodule in axialer Richtung aus. Diese thermische Ausdehnung führt bei zwei benachbarten, mechanisch miteinander verbundenen Sammelschienenmodulen/Modulen zu Kräften, welche in axialer Richtung eine entgegengesetzte Richtungskomponente haben. In der Folge stossen sich die beiden Sammelschienenmodule/Module gegenseitig von sich weg, wenn die Sammelschienenmodule an ihren einander zugewandten Enden fest miteinander verbunden sind, beispielsweise direkt oder über einen Zuganker. Dies kann zu starken Verspannungen führen und eine Verankerung der Schaltfelder im Fundament belasten.

Um dies zu Verhindern, sind daher entsprechende Massnahmen vorzunehmen. Bei einer Erwärmung des Gasvolumens in der Kompensationseinheit entstehen lediglich Kräfte infolge des Gasdrucks auf gasberührte Flächen der Sammelschienenmodule/Module, jedoch aufgrund des längenvariablen Gehäuses der Kompensationseinheiten keine in axialer Richtung wirkenden Kräfte aufgrund einer thermischen Ausdehnung ihres längenvariablen Gehäuses, weil sich thermisch ausgedehnte Abschnitte des Gehäuses übereinander schieben.

Da die Kapselungs- beziehungsweise gehäuseseitigen Kräfte, welche durch die thermische Ausdehnung der Sammelschienenmodule/Module hervorgerufenen Kräfte um ein Vielfaches grösser sind, als die durch die Erwärmung des Gases hervorgerufenen Kräfte, kommt der Kompensation der Ersteren eine grosse Bedeutung zu.

Um den obgenannten resultierenden Kräften der thermischen Ausdehnung zu entgegnen, sind aus dem Stand der Technik mehrere Kompensationsmethoden bekannt.

Ein Vertreter einer ersten Methode bildet beispielsweise die DE 10 2007 038 934 A1. Bei dieser Kompensationseinheit ist ein Expansionsraum zur Aufnahme einer Gasmenge derart vorgesehen, dass bei einer Längenänderung des rohrförmigen Längsabschnitts die Summe der Volumina vom Kompensationsraum im rohrförmigen Längsabschnitts und vom Expansionsraum annähernd konstant bleibt, so dass keine problematischen resultierenden Kräfte des Gasdrucks auftreten und die Kräfte der thermischen Ausdehnung der Anschlussmodule nicht gegeneinander wirken können.

Diese Methode kann zwar Gasdruckänderungen kompensieren und aufgrund der Längenänderung des Kompensationsbalges/der Kompensationsbälge die Wirksamkeit der resultierenden Kräfte aufgrund der thermischen Ausdehnung der Anschlussmodule unterbinden, führt jedoch aufgrund der verhältnismässig komplexen und aufwändigen Konstruktion einen erheblichen Aufwand.

Bei einer zweiten Methode werden zur Aufnahme der entstehenden resultierenden Kräfte aufgrund der thermischen Ausdehnung der Kapselung Zuganker eingesetzt. Ein Vertreter dieser Methode ist beispielsweise die EP 0 093 687 A1. Aus der EP 0 093 687 A1 ist eine druckgasisolierte Hochspannungsschaltanlage mit einem Sammelschienensystem und Schaltfeldern bekannt, bei dem Abzweige der Sammelschiene beziehungsweise deren Kapselung/Gehäuse bezüglich einem Fundament der GIS ortsfest verankert sind. Dabei wird die Sammelschiene auf zwei parallele Achsen aufgeteilt, um die Gesamtausdehnung der Sammelschiene und die dadurch entstehenden Kräfte aufzubrechen. Um zusätzlich eine Kräfteentkopplung von durch den Gasdruck verursachten Kräften der thermischen Ausdehnung der Sammelschiene zu erzielen, ist jeder Abzweig über einen Kompensationsbalg mit den Anschluss- und Sammelschienenmodulen verbunden, so dass die Sammelschiene bezüglich dem ortsfesten Abzweig quasi schwimmend ist. Dazu ist ein Zuganker derart angeordnet, dass er beide Kompensationsbälge und den dazwischen liegenden Abzweig überspannt. In der Folge entstehen aufgrund der thermischen Ausdehnung der Kapselung der Sammelschienenabschnitte keine resultierenden Kräfte auf den Abzweig und dessen Befestigung am Fundament.

Diese Kompensationslösung verbraucht viel Platz durch die zickzack-artige verschränkte Sammelschiene. Zudem ist diese Anordnung kompliziert herzustellen, erfordert pro Abzweig zwei Kompensatoren und kompensiert die thermische Ausdehnung der Kapselung nicht, sondern umgeht es über die zickzack-artige Ausbildung der Sammelschiene.

Es ist daher Aufgabe der vorliegenden Erfindung, eine Schaltanlage vorzulegen, bei welcher die nebst der Kräfte des Gasdrucks auftretenden, resultierenden Kräfte aufgrund der thermischen Ausdehnung des Kapselung im Wesentlichen auf verhältnismässig einfache Weise ausgeglichen werden, so dass damit eine in axialer Richtung durchgehende Sammelschiene realisierbar ist.

Diese Aufgabe wird von einer Schaltanlage gemäß Anspruch 1 gelöst.

Gemäß einem Aspekt wird eine gasisolierte Schaltanlage mit mindestens einer Sammelschiene bereitgestellt, die eine axiale Richtung definiert und eine Kapselung umfasst, wobei die Kapselung aufweist: mindestens ein Paar von axial benachbarten Modulen, wobei das erste Modul des Paars von axial benachbarten Modulen einen ersten, insbesondere ortsfest zu haltenden, Referenzpunkt in axialer Richtung aufweist und das zweite Modul des Paars von axial benachbarten Modulen einen zweiten, insbesondere ortsfest zu haltenden, Referenzpunkt in axialer Richtung; und eine jeweils zwischen den Modulen eines Paars von axial benachbarten Modulen angeordnete Kompensationseinheit; mindestens einen, insbesondere konstant zu haltenden, Modulabstand, der durch die axiale Entfernung zwischen dem ersten Referenzpunkt und dem zweiten Referenzpunkt des jeweiligen Paars von axial benachbarten Modulen definiert wird; und mindestens einen dem Paar von axial benachbarten Modulen zugeordneten, sich in axialer Richtung erstreckenden Zuganker, der an einem ersten Befestigungspunkt an dem ersten Modul und an einem zweiten Befestigungspunkt an dem zweiten Modul befestigt ist, wobei sich eine thermische Veränderung einer Länge in axialer Richtung des mindestens einen Zugankers zwischen dem ersten Befestigungspunkt und dem zweiten Befestigungspunkt, eine thermische Veränderung in axialer Richtung der Entfernung zwischen dem ersten Befestigungspunkt des ersten Moduls und dem ersten Referenzpunkt, und eine thermische Veränderung in axialer Richtung der Entfernung zwischen dem zweiten Befestigungspunkt des zweiten Moduls und dem zweiten Referenzpunkt sich zumindest teilweise ausgleichen, derart dass sich der Modulabstand bei einer Erwärmung oder Abkühlung der Kapselung sich weniger als um einen vorbestimmten Betrag in axialer Richtung verändert.

Unter dem Begriff Kapselung wird nachfolgend die gesamte Kapselung der Sammelschiene verstanden.

Ein erster Vorteil dieser GIS liegt darin, dass eine Kompensation der resultierenden Kräfte vom Gasdruck und der thermischen Ausdehnung der Module der Kapselung der Sammelschiene erzielbar ist, ohne dass dazu eine äusserst komplexe Kompensationseinrichtung, wie etwa gemäss der DE 10 2007 038 934 A1, erforderlich ist.

Ein zweiter Vorteil liegt darin, dass sich damit sperrige, zickzackartige Ausbildungen der Sammelschiene wie bei der EP 0 093 687 A1 vermeiden lassen, indem die erfindungsgemässe Lösung eine weitestgehende Aufnahme der durch die thermische Ausdehnung auftretenden Kräfte selbst bei einer linearen Ausbildung der Sammelschiene ermöglicht.

Dabei sind die thermischen Veränderungen des Zugankers, des ersten Moduls zwischen dem ersten Befestigungspunkt und dem ersten Referenzpunkt, und des zweiten Moduls zwischen dem zweiten Befestigungspunkt und dem zweiten Referenzpunkt in einem bestimmten Verhältnis zueinander. Beispielsweise kann in einer Ausführungsform der mindestens eine Zuganker im Wesentlichen die gleiche Temperatur aufweisen wie das erste Modul zwischen dem ersten Befestigungspunkt und dem ersten Referenzpunkt und das zweite Modul zwischen dem zweiten Befestigungspunkt und dem zweiten Referenzpunkt.

Darunter, dass sich die thermische Veränderung, beispielsweise eine Ausdehnung, in axialer Richtung ausgleichen, wird beispielsweise verstanden, dass die thermische Veränderung des Zugankers zwischen dem ersten Befestigungspunkt und dem zweiten Befestigungspunkt, die thermische Veränderung in axialer Richtung der Entfernung zwischen dem ersten Befestigungspunkt des ersten Moduls und dem ersten Referenzpunkt, und eine thermische Veränderung in axialer Richtung der Entfernung zwischen dem zweiten Befestigungspunkt des zweiten Moduls und dem zweiten Referenzpunkt sich nicht so gegenseitig Verstärken, so dass die thermischen Veränderungen eine verstärkte Veränderung des Modulabstands hervorrufen.

Beispielsweise ist der vorbestimmte Betrag in axialer Richtung kleiner als die Längenveränderung der Summe von der Entfernung zwischen dem ersten Befestigungspunkt des ersten Moduls und dem ersten Referenzpunkt und der Entfernung zwischen dem zweiten Befestigungspunkt des zweiten Moduls und dem zweiten Referenzpunkt.

Mit anderen Worten sind die Materialen und die Befestigungspunkte derart ausgewählt, dass der Modulabstands eine möglichst geringe Schwankungsbreite bei sich verändernden Temperaturen der Kapselung und der Zuganker aufweisen.

In einer Ausführungsform, die mit anderen Ausführungsformen kombinierbar ist, ist der Zuganker starr, so dass die thermische Veränderung in axialer Richtung des Zugankers auf den thermischen Eigenschaften des mindestens einen Materials des Zugankers beruht, insbesondere nur auf den thermischen Eigenschaften des mindestens einen Materials des Zugankers beruht.

In einer Ausführungsform sind die Länge des mindestens einen dem Paar zugeordneten Zugankers in axialer Richtung zwischen dem ersten und dem zweiten Befestigungspunkt größer als der Modulabstand des Paars ist, wobei eine thermische Ausdehnung in axialer Richtung von dem mindestens einen Zuganker eine thermische Ausdehnung in axialer Richtung von den Modulen zumindest teilweise ausgleicht.

Durch die Wahl eines Zugankers mit einer Länge zwischen den Befestigungspunkten, die größer ist als der Modulabstand, wird erreicht, dass sich bei einer Erwärmung des Materials der Module der Kapselung der Abstand der Befestigungspunkte in der gleichen Weise erhöht wie sich auch die Länge des Zugankers verlängert, auch wenn die Referenzpunkte ortsfest gehalten werden. Insbesondere kann dadurch erreicht werden, dass sich die thermische Ausdehnung in axialer Richtung der Module der Kapselung und die thermische Ausdehnung des Zugankers aneinander angepasst sind.

In einer Ausführungsform kann bei einem Temperaturunterschied von 50° Celsius, insbesondere des ersten und zweiten Moduls und des Zugankers, sich der Modulabstand weniger als 1% verändern, insbesondere weniger als 0,5% verändern. Durch eine solche geringe Veränderung des Modulabstands wird vermieden, dass sich die Schaltfelder verspannen oder aus den Fundamenten gerissen werden können.

Die gasisolierte Schaltanlage ist mit einem Isoliergas befüllt, beispielsweise Schwefelhexafluorid (SF6), das unter Druck steht. Der Druck kann sich aufgrund der Erwärmung der Strom führenden Teile noch erhöhen. Bei 20° Celsius kann der Druck größer als 2,5 bar sein, insbesondere größer als 4 bar. Der Einfluss der Krafterhöhung von sich erwärmenden Isoliergas ist im Verhältnis der Krafterhöhung aufgrund der thermischen Ausdehnung der Kapselung in erster Näherung vernachlässigbar.

Beispielsweise kann in einer Ausführungsform das mindestens eine zur thermischen Ausdehnung in axialer Richtung beitragende Material der Kapselung beziehungsweise des Moduls der Kapselung und das mindestens eine zur thermischen Ausdehnung in axialer Richtung beitragende Material des Zugankers derart ausgewählt sein, dass bei einer Erwärmung der Kapselung und des Zugankers von 50° Celsius sich der Modulabstand weniger als 1% verändert, insbesondere weniger als 0,5% verändert. Die Auswahl der Materialen kann beispielsweise derart erfolgen, dass der Ausdehnungskoeffizient in axialer Richtung bestimmt wird. Beispielsweise ist der Ausdehnungskoeffizient des Materials der Kapselung in axialer Richtung größer als der Ausdehnungskoeffizient des mindestens einen Materials des Zugankers in axialer Richtung, falls die Länge des Zugankers in axialer Richtung zwischen dem ersten Befestigungspunkt und dem zweiten Befestigungspunkt größer ist als der Modulabstand. Sowohl die Kapselung als auch der Zuganker können ein Kompositmaterial umfassen. Je nach Art und Ausführungsform des Kompositmaterials kann dieses bei ähnlicher Dimensionierung grössere Zugkräfte aufnehmen, als dies etwa bei einer Ausführungsform aus Stahl der Fall ist.

In einer anderen Ausführungsform kann der Ausdehnungskoeffizient in axialer Richtung des mindestens einen Materials des Zugankers negativ sein, falls die Länge des Zugankers in axialer Richtung zwischen dem ersten Befestigungspunkt und dem zweiten Befestigungspunkt kleiner ist als der Modulabstand.

Eine Ausführungsform kann dadurch gekennzeichnet sein, dass sich eine thermische Ausdehnung in axialer Richtung der Kapselung zwischen dem ersten Referenzpunkt und ersten Befestigungspunkt und zwischen dem zweiten Referenzpunkt und dem zweiten Befestigungspunkt und eine thermische Ausdehnung in axialer Richtung des mindestens einen Zugankers zwischen dem ersten und zweiten Befestigungspunkten derart ausgleichen, dass bei einer Erwärmung von 50° Celsius sich der Modulabstand weniger als 1% verändert, insbesondere weniger als 0,5% verändert.

Beispielsweise können in einer Ausführungsform die Module des Paars jeweils einen von ihrem Referenzpunkt aus auf der Kompensationseinheit abgewandten axialen Abschnitt aufweisen, wobei der mindestens eine Zuganker jeweils an dem axialen Abschnitt oder am Referenzpunkt an einem Befestigungspunkt befestigt ist. Mit anderen Worten kann der erste Befestigungspunkt an dem ersten Referenzpunkt und der zweite Befestigungspunkt an dem axialen Abschnitt des zweiten Moduls des Paars von axial benachbarten Module angeordnet sein oder umgekehrt der zweite Befestigungspunkt an dem zweiten Referenzpunkt angeordnet sein und der erste Befestigungspunkt an dem axialen Abschnitt des ersten Moduls des Paars von axial benachbarten Module angeordnet sein.

Ferner kann in einer Ausführungsform der Referenzpunkt jeden Moduls in der Mitte in axialer Richtung des Moduls angeordnet sein.

In einer Ausführungsform kann der mindestens eine Zuganker außerhalb des Gasraums der ersten und des zweiten Moduls des Paars von axial benachbarten Modulen angeordnet sein. Dadurch lässt sich die Abwärme der Kapselung ausnutzen, um den mindestens einen Zuganker auf der gleichen Temperatur wie die Kapselung beziehungsweise des Moduls der Kapselung zu halten. Zudem lässt sich der Zuganker dann leichter montieren.

Beispielsweise kann in einer Ausführungsform mindestens einer der Befestigungspunkte an einem axialen Ende des jeweiligen Moduls der Kapselung angeordnet sein. Dadurch kann der Zuganker eine maximale Länge aufweisen.

Eine Ausführungsform kann dadurch gekennzeichnet sein, dass der Abstand zwischen dem ersten Befestigungspunkt und dem ersten Referenzpunkt des ersten Moduls und der Abstand zwischen zweiten Befestigungspunkt und dem zweiten Referenzpunkt des zweiten Moduls gleich sind. Dies ermöglicht eine einfache Konstruktion und einen unkomplizierten Aufbau der Schaltanlage.

Je nach Ausführungsform sind die Sammelschienenmodule beziehungsweise deren Kapselungsabschnitte direkt oder indirekt über andere Komponenten des Schaltfeldes mit einem Fundament ortsfest verbunden, insbesondere im Bereich der Referenzpunkte.

Ferner kann in einer Ausführungsform vorgesehen sein, dass die Module mindestens einen Schalter beinhalten.

Beispielsweise kann in einer Ausführungsform das Gas in den mindestens zwei Modulen und/oder der Kompensationseinheit einen Druck von mehr als 2,5 bar, insbesondere mehr als 4 bar bei 20°C aufweisen.

Ferner kann in einer Ausführungsform vorgesehen sein, dass in dem ersten und/oder zweiten Modul, insbesondere des Paars von axial benachbarten Modulen, der Kapselung Aluminium zur Veränderung der Länge in axialer Richtung beiträgt.

Ferner ist eine Ausführungsform dadurch gekennzeichnet, dass in dem mindestens einen Zuganker Stahl zur Veränderung der Länge in axialer Richtung beiträgt.

Alternativ oder in Ergänzung dazu ist der Zuganker zumindest teilweise in Kompositbauweise ausgeführt. Je nach Ausführungsform sind beispielsweise in axialer Richtung orientierte Kohlenfaserwerkstoffe mit einem Zement zu einem Kompositwerkstoff zusammengefügt, um die entstehenden Längskräfte in axialer Richtung beziehungsweise der Laufrichtung der Sammelschiene optimal aufnehmen zu können. Zur mechanischen Anbindung an die Sammelschienenmodule ist der Kompositwerkstoff beispielsweise endseitig mit metallischen Anschlusselementen, etwa in Form von Ösen, verbunden. Ein Einsatz von einem oder gar mehreren Kompositwerkstoffen erlaubt beispielsweise eine präzise Vordefinition des Ausdehnungs- und Kraftaufnahmeverhaltens des Zugankers. Damit sind Zuganker realisierbar, welche Eigenschaften aufweisen, die mit rein metallischen Werkstoffen bislang so nicht erzielbar waren.

Ein Einsatz von Zuganker aus Kompositwerkstoffen ermöglicht eine freiere Anordnung der Befestigungspunkte auf den Modulen. Zudem sind Kompositwerkstoffe oft kostengünstiger und weisen eine geringere Masse auf.

Ferner kann in einer Ausführungsform vorgesehen sein, dass die mindestens eine Kompensationseinheit eine axiale thermische Längenveränderung mindestens eines von dem Referenzpunkten einander zugewandten Modulabschnittes der Module des Paars relativ zueinander ausgleicht. Beispielsweise, wenn sich ein von dem ersten Referenzpunkt aus dem zweiten Modul zugewandten Modulabschnitt und ein von dem zweiten Referenzpunkt aus dem ersten Modul zugewandten Modulabschnitt ausdehnen, verringert sich die Ausdehnung in Axialrichtung der Kompensationseinheit. Beispielsweise kann dies durch sich übereinander schiebende Kapselungsabschnitte realisiert werden.

Ferner ist eine Ausführungsform dadurch gekennzeichnet, dass die Schaltanlage mehr als zwei axial hintereinander angeordnete Module aufweist, wobei jeweils zwei axial benachbarte Module ein Paar bilden.

In einer besonderen Ausführungsform können die Zuganker über den Kapselungen angeordnet sein, d.h. von den Kapselungen aus in eine Richtung entgegen der Richtung der Erdanziehungskraft. Dann ist der Temperaturunterschied zwischen der Kapselung und dem Zuganker geringer, da insbesondere die durch die Kapselung oder Gehäuse erwärmte Luft an dem Zuganker vorbeiströmt.

In einer Ausführungsform ist der Zuganker ohne Federelement ausgebildet, das eine Federung in die axiale Richtung bewirkt.

Weitere Vorteile, Merkmale, Aspekte und Details der Erfindung sowie bevorzugte Ausführungen und besondere Aspekte der Erfindung ergeben sich aus den Ansprüchen, der Beschreibung und den Figuren.

Im Weiteren soll die Erfindung anhand von in Figuren dargestellten Ausführungsbeispielen erläutert werden, aus denen sich weitere Vorteilteile und Abwandlungen ergeben. Dabei zeigen:

Fig. 1 eine schematische Querschnitts-Seitenansicht eines Ausschnitts einer Ausführungsform einer gasisolierten Schaltanlage ohne Nominalleiter;

Fig. 2 eine schematische Querschnitts-Draufsicht eines Ausschnitts einer weiteren Ausführungsform einer gasisolierten Schaltanlage;

Fig. 3 einen schematischen Graph der thermischen Vergrößerung des Modulabstands einer Ausführungsform;

Fig. 4 einen schematischen Graph der thermischen Vergrößerung des Modulabstands einer weiteren Ausführungsform.

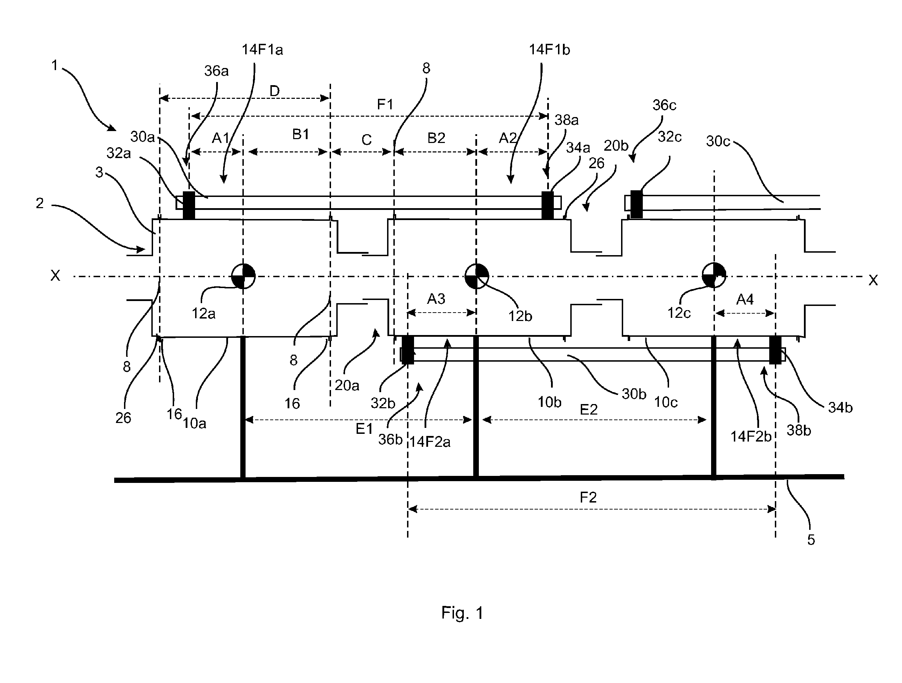

Fig. 1 zeigt eine schematische Querschnittsseitensicht eines Abschnitts einer Ausführungsform einer Gasisolierten Schaltanlage 1. Die Schaltanlage 1 weist eine Kapselung 3 auf. Beispielsweise kann die Kapselung 3 aus einem Aluminiumguss oder einer Aluminiumlegierung oder einem Kompositwerkstoff gebildet sein. In Fig. 1 sind kein Nominalleiter und keine Isolatoren gezeigt.

Mehrere (Hochspannungs-) Schalterfelder von gasisolierten Schaltanlagen sind typischerweise parallel angeordnet und elektrisch und mechanisch zueinander mit einer Sammelschiene verbunden, die typischerweise senkrecht zu den Schaltfeldern angeordnet ist. Mechanisch kann ein Abschnitt oder Sammelschienenmodul ein Teil eines Schaltfelds sein und fest mit dem Schaltfeld verbunden sein.

Beispielsweise kann der in Fig. 1 gezeigte Abschnitt eine Sammelschiene 2 einer gasisolierten Schaltanlage 1 sein. Der Gegenstand der offenbarten Ausführungsformen kann auch andere Abschnitte einer Schaltanlage umfassen, als eine Sammelschiene. Obwohl das in der Fig. 1 gezeigte Beispiel eine einphasig gekapselte Sammelschiene 2 zeigt, gilt die dieser Erfindung innewohnende technische Lehre entsprechend auch für eine mehrphasig gekapselte Sammelschiene. Bei Letzterer kann jeder Nominalleiter im Bereich zwischen zwei Sammelschienenmodulen von einer eigenen Kompensationseinheit umgeben sein, so dass er letztlich in diesem Bereich einphasig gekapselt ist.

Die Kapselung 3 der Sammelschiene 2 umfasst eine Vielzahl von Modulen 10a, 10b, 10c, die entlang einer Achse X hintereinander angeordnet sind, das heisst bezüglich des Nominalleiters einer Phase gesehen, in einer Flucht. Die Achse X entspricht in einer Ausführungsform auch der Achse eines Nominalleiters im Falle einer einphasig gekapselten Sammelschiene 2. In Fig. 1 sind drei Module gezeigt. Die Schaltanlage kann gemäß einer Ausführungsform auch nur zwei hintereinander auf der Achse X angeordnete Module oder auch mehr als drei hintereinander auf der Achse X angeordnete Module aufweisen. Die Module weisen eine Modullänge D zwischen ihren beiden Enden in axialer Richtung auf, an den jeweils eine Verbindungsebene 8 angeordnet ist, um ein weiteres Modul oder eine Kompensationseinheit anzuschließen.

Die Module 10a, 10b, 10c der Kapselung sind auf einem Fundament 5 angeordnet oder mit dem Fundament beispielsweise indirekt über einen Hochspannungsschalter ortsfest verbunden.

Zwischen jeweils zwei axial benachbarten Modulen 10a, 10b; 10b, 10c der Kapselung 3 ist jeweils eine Kompensationseinheit 20a, 20b angeordnet. Beispielsweise können somit benachbarte Schaltfelder über die Kompensationseinheiten 20a, 20b zwischen den Modulen 10a, 10b, 10c der Kapselung verbunden sein. Die Kompensationseinheiten 20a, 20b können je nach Ausführungsform überdies dazu genutzt werden ein Auseinanderbauen der gasisolierten Schaltanlage zu vereinfachen, ohne dass ein Großteil der Schaltfelder auseinandergebaut werden muss. Die Kompensationseinheiten 20a, 20b weisen daher eine variable Länge C in axialer Richtung X auf. Die variable Länge kann in einer Ausführungsform dadurch erreicht werden, dass zwei Zylinder, die einen unterschiedlichen Durchmesser aufweisen, sich übereinander schieben.

Beispielsweise weisen in einer Ausführungsform die Module 10a, 10b, 10c an ihren axialen Enden jeweils einen Flansch 16 auf, der mit einem Flansch 26 an den jeweiligen axialen Enden der Kompensationseinheiten fest verbunden wird. Die Flansche von den Modulen 10a, 10b, 10c der Kapselung und den Kompensationseinheiten 20a, 20b können jeweils kreisförmig ausgebildet sein.

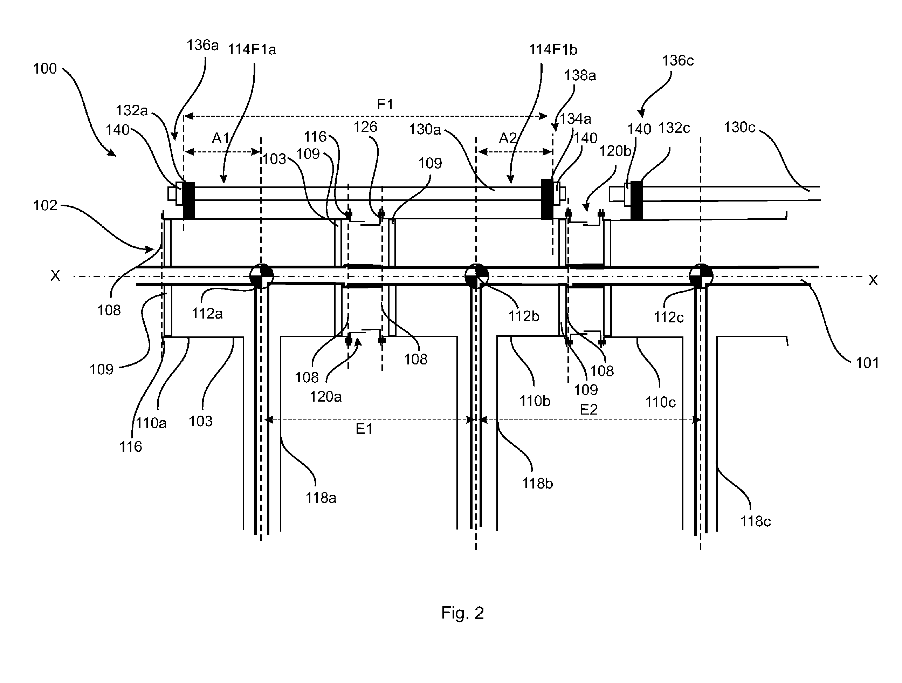

An den Verbindungsebenen 8 zwischen den Kompensationseinheiten und den Modulen können Isolatoren 109 (siehe Fig. 2) angeordnet sein, die aktive Teile, beispielsweise einen Nominalleiter 101 (siehe Fig. 2), tragen. Die Isolatoren können die Sammelschiene je nach Bedarf und Wartungskonzept in verschiedene Gasabteilungen aufteilen, indem sie als Stütz- oder als Schottisolator ausgebildet sind.

Der Gasdruck in der Kompensationseinheit 20a, 20b führt zu Kräften, wenn der Gasraum der Kompensationseinheiten von dem Gasraum der Module 10a, 10b, 10c getrennt ist, beispielsweise durch an den Verbindungsebenen 8 angeordneten Isolatoren, die deren Länge C in axialer Richtung X vergrößern möchten und daher eine Kraft auf die jeweils benachbarten Module 10, 10b, 10c der Kapselung in axialer Richtung ausüben. Um diese Kräfte zu kompensieren und um die Position der Module 10a, 10b, 10c der Kapselung zu fixieren werden Zuganker 30a, 30b, 30c an die axial benachbarten Module der Kapselung der Sammelschiene befestigt.

Die Module 10a, 10b, 10c der Kapselung sind jeweils Teil eines Schaltfelds einer Unterstation. Der Abstand der Schaltfelder oder der Modulabstand zueinander wird typischerweise durch die ortsfesten Abschnitte der Schaltfelder bestimmt. Beispielsweise weist die in Fig. 1 gezeigte Anordnung einen ersten Modulabstand E1 zwischen dem ersten Modul 10a und dem zweiten Modul 10b und einen zweiten Modulabstand E2 zwischen dem zweiten Modul 10b und dem dritten Modul 10c auf. Je nach Ausführungsform der GIS ist der erste Modulabstand E1 gleich dem zweiten Modulabstand E2, so wie in den Figuren gezeigt, oder unterschiedlich (nicht gezeigt).

Die Module 10a, 10b, 10c der Kapselung weisen jeweils einen Referenzpunkt 12a, 12b, 12c auf. Aufgrund des besseren Verständnisses ist in der vorliegenden Beschreibung und den Ansprüchen der Begriff Referenzpunkt gewählt worden. Die Referenzpunkt 12a, 12b, 12c sind jeweils ein Punkt im oder an den jeweiligen Modulen, der im Wesentlichen ortsfest gehalten wird. Beispielsweise werden die Referenzpunkte 12a, 12b, 12c bezüglich eines Fundaments 5 im Wesentlichen ortsfest im dreidimensionalen Raum gehalten, damit die Sammelschienenmodule beziehungsweise die ihnen zugeordneten Schaltfelder nicht aus deren Verankerung im Fundament 5 gerissen werden oder erhebliche mechanische Spannungen in den Schaltfeldern auftreten. Je nach Ausführungsform ist der Referenzpunkt 12a, 12b, 12c direkt oder indirekt, beispielsweise über einen Hochspannungsschalter des zu dem Modul gehörenden Schaltfelds, mit dem Fundament 5 verbunden. So kann ein Referenzpunkt 12a, 12b, 12c in axialer Richtung X bei einer Abzweigung eines Nominalleiters angeordnet sein, der beispielsweise zu einem Hochspannungsschalter geführt wird.

In der in Fig. 1 gezeigten Ausführungsform, die mit anderen Ausführungsformen kombiniert werden kann, ist der Referenzpunkt in axialer Richtung in der Mitte des jeweiligen Moduls 10a, 10b, 10c angeordnet.

Beispielsweise wird die thermische Ausdehnung der Kapselung 3 zwischen den Referenzpunkten 12a, 12b, 12c und den jeweiligen zueinander gerichteten Enden der Module 10a, 10b, 10c der Kapselung jeweils durch eine Kompensationseinheit 20a, 20b ausgeglichen, deren Länge C in axialer Richtung X sich entsprechend verkürzen. Mit anderen Worten ein jeweiliger Abschnitt der Kapselung zwischen den Referenzpunkten 12a, 12b, 12c und den jeweiligen zueinander gerichteten Enden der Module 10a, 10b, 10c mit den jeweiligen einer Abschnittslänge B2 in axialer Richtung X verlängert sich und die axiale Länge C der Kompensationseinheit 20a, 20b verkürzt sich. Das Verkürzen der Kompensationseinheit wird durch teilweise übereinander schiebbare Hohlzylinder bewerkstelligt, wie in Fig. 1 und Fig. 2 schematisch zu sehen ist. Ohne eine Kompensationseinheit 20a, 20b würden sich zwei benachbarte Module 10a, 10b, 10c bei einer thermischen Dehnung jeweils abstoßen.

Ein erster Zuganker 30a weist ein erstes Ende 36a, das an einem ersten Befestigungspunkt 32a an dem ersten Modul 10a der Kapselung 3 befestigt ist, und ein zweites Ende 38a auf, das an einem zweiten Befestigungspunkt 34a an dem zweiten Modul 10b der Kapselung 3 befestigt ist. Entsprechend weist ein zweiter Zuganker 30b ein erstes Ende 36b, das an einem ersten Befestigungspunkt 32b an dem zweiten Modul 10b der Kapselung 3 befestigt ist, und ein zweites Ende 38b auf, das an einem zweiten Befestigungspunkt 34b an dem dritten Moduls 10c der Kapselung 3 befestigt ist. Ferner ein erstes Ende 36c eines dritten Zugankers mit einem ersten Befestigungspunkt 32c an dem dritten Modul 10c der Kapselung 3 befestigt. Der dritte Zuganker 30c ist jedoch in Fig. 1 nicht vollständig dargestellt. Ein nicht sichtbare Ende des dritten Zugankers 30c ist an einem nicht gezeigten Modul der Kapselung 3 befestigt.

Die Befestigungspunkte können bei einem ersten Paar von zwei axial benachbarten Modulen der Kapselung 3, das aus dem ersten Modul 10a und dem zweiten Modul 10b gebildet ist, die über den ersten Zuganker 30a zusammengehalten werden, folgendermassen angeordnet sein: Das erste Modul 10a weist einen Abschnitt 14F1a auf, der von dem Referenzpunkt 12a des ersten Moduls aus von dem zweiten Modul 10b abgewandt ist. An diesem Abschnitt 14F1a des ersten Moduls ist der erste Befestigungspunkt 32a angeordnet. Das zweite Modul 10b weist einen Abschnitt 14F1b auf, der von dem Referenzpunkt 12b des zweiten Moduls 10b aus von dem ersten Modul 10a abgewandt ist. An diesem Abschnitt 14F1b des zweiten Moduls ist der zweite Befestigungspunkt 34a angeordnet.

Entsprechend sind bei einem zweiten Paar von Modulen, bestehend aus dem zweiten Modul 10b und dem dritten Modul 10c, die über den zweiten Zuganker 30b zusammengehalten werden, die Befestigungspunkte 32b, 34b angeordnet. Das zweite Modul 10b weist einen Abschnitt 14F2a auf, der von dem Referenzpunkt 12b des zweiten Moduls 10b aus dem dritten Modul 10c abgewandt ist. An diesem Abschnitt 14F2a ist der erste Befestigungspunkt 32b des zweiten Zugankers 30b angeordnet. Entsprechend weist das dritte Modul 10c einen Abschnitt 14F2b auf, der von dem Referenzpunkt 12c des dritten Moduls aus dem zweiten Modul 10b abgewandt ist. An diesem Abschnitt 14F2b des dritten Moduls 10c ist der zweite Befestigungspunkt 34b des zweiten Zugankers 30b angeordnet.

Daraus lässt sich das System der erfindungsgemässen Längenkompensation erkennen, welches sich in dieser Weise über viele Module einer Sammelschiene erstrecken kann.

Die Zuganker müssen jedoch nicht zwingend an ihren jeweiligen Enden 36a, 36b, 38a, 38b an den Befestigungspunkten befestigt sein. Für den Gegenstand der Anmeldung kommt es vielmehr auf die Länge in axialer Richtung X der Zuganker 30a, 30b, 30c zwischen den Befestigungspunkten 32a, 32b, 32c, 34a, 34b im Zusammenhang mit den Längenausdehnungskoeffizienten des Zugankers und des entsprechenden Längenabschnitts des zugeordneten Moduls an. Die Zuganker in Fig. 1 reichen jeweils über zwei Module 10a, 10b, 10c hinweg und sind an den jeweils voneinander entfernten Enden der Module der Kapselung einer Sammelschiene über die Befestigungspunkte 32a, 32b, 32c, 34a, 34b an diesen befestigt. Durch eine geeignetes Zugankermaterial und geeignete Befestigungspunkte in axialer Richtung auf den Modulen kann die thermische Ausdehnung der Module 10a, 10b, 10c der Kapselung 3 kompensiert werden. Ferner kompensieren die Zuganker 30a, 30b, 30c die auf die Module in axialer Richtung X ausgeübte Kraft des in den Kompensationseinheiten 20a, 20b befindlichen Gases, die aber im Vergleich mit der thermischen Ausdehnung der Module 10a, 10b, 10c gering oder sogar vernachlässigbar ist. Jedoch verhindert beispielsweise der erste Zuganker 30a, dass die ersten und zweiten Module 10a, 10b voneinander weggedrückt werden, und der zweite Zuganker 30b, dass die zweiten und dritten Module 10b, 10c voneinander weggedrückt werden.

In der nachfolgenden mathematischen Herleitung wird davon ausgegangen, dass die Referenzpunkte 12a, 12b, 12c jeweils mittig in axialer Richtung von den Modulen 10a, 10b, 10c der Kapselung der Sammelschiene 2 angeordnet sind.

Die Entfernungen sind wie folgt definiert und werden in Bezug auf das linke und mittlere Modul der Kapselung in Fig. 1 erläutert:

A1 ist die Entfernung in axialer Richtung X zwischen dem ersten Befestigungspunkt 32a und der Mitte des ersten Moduls 10a, der dem ersten Referenzpunkt 12a entspricht.

A2 ist die Entfernung in axialer Richtung X zwischen dem zweiten Befestigungspunkt 34a und der Mitte des zweiten Moduls 10b, der dem zweiten Referenzpunkt 12b entspricht.

In Bezug auf den zweiten Zuganker 30b mit einer Länge in axialer Richtung F2 zwischen dem ersten und zweiten Befestigungspunkt 32b, 34b sind die Entfernungen wie folgt definiert:

A3 ist die Entfernung in axialer Richtung X zwischen dem ersten Befestigungspunkt 32b und dem Referenzpunkt 12b des zweiten Moduls 10b und A4 ist die Entfernung in axialer Richtung X zwischen dem zweiten Befestigungspunkt 34b und dem Referenzpunkt 12c des dritten Moduls 10c.

Im Folgenden wird zur Veranschaulichung eine Ausführungsform gewählt, bei der die Entfernungen A1, A3 gleich der Entfernungen A2, A4 ist. Daher werden diese Entfernungen allgemein mit A bezeichnet. Es sind aber auch andere Ausführungen möglich, bei denen die Entfernung A1 ungleich von A2 ist und A3 ungleich von A4. Dies führt lediglich zu einer aufwändigeren mathematischen Herleitung.

Ferner ist ein erster Modulabstand zwischen dem ersten Modul 10a und dem zweiten Modul 10b mit E1 und ein zweiter Modulabstand E2 zwischen dem dritten Modul 10c und dem zweiten Modul 10b mit E2 bezeichnet. Zur Vereinfachung der folgenden mathematischen Betrachtungen wird davon ausgegangen, dass der erste Modulabstand gleich dem zweiten Modulabstand ist und wird daher der Einfachheit halber mit E bezeichnet. Der Modulabstand entspricht im Übrigen dem Abstand zwischen den jeweiligen Referenzpunkten 12a, 12b, 12c der Module 10a, 10b, 10c der Kapselung 3 der Sammelschiene 2.

Sollte ein Modul mehr als einen Referenzpunkt aufweisen, so wird bei Betrachtung von zwei axial benachbarten Modulen als Referenzpunkt für die Berechnungen der Entfernungen jeweils der von dem anderen Modul am weitesten entfernte Referenzpunkt gewählt. Im Falle von Flächigen Referenzpunkten wird für die Berechnungen der Entfernungen die Mitte in axialer Richtung X gewählt.

Die Zuganker 30a, 30b weisen jeweils eine Länge zwischen den ersten und zweiten Befestigungspunkten 32a, 34a und 32b, 34b von F1, F2 auf. Für die nachfolgenden Betrachtungen wird davon ausgegangen, dass die Länge der Zuganker zwischen den Befestigungspunkten 32a, 32b, 34a, 34b jeweils gleich ist, und wird mit F bezeichnet.

Die Länge eines Moduls 10a wird mit D bezeichnet. Die Länge des Moduls ist die Entfernung in axialer Richtung X zwischen den Verbindungsflächen 8.

Ferner wird die axiale Länge eines Abschnitts des ersten Moduls 10a zwischen seinem Referenzpunkt 12a und dem dem zweiten Modul 10b zugewandten Ende beziehungsweise Verbindungsfläche 8 mit B1 bezeichnet, und die Länge eines Abschnitts des zweiten Moduls 10b zwischen seinem Referenzpunkt 12b und dem dem ersten Modul 10a zugewandten Ende beziehungsweise Verbindungsfläche 8 mit B2 bezeichnet. Im Nachfolgenden wird zur Vereinfachung davon ausgegangen, das B1 gleich B2 ist und mit B bezeichnet.

In einer Ausführungsform, zur Veranschaulichung, entspricht B1, B2 und/oder B der halben Länge des ersten beziehungsweise zweiten Moduls 10a, 10b in axialer Richtung X.

Mit C wird die Länge in axialer Richtung der ersten Kompensationseinheit 20a bezeichnet.

Zwischen den oben eingeführten Längen in axialer Richtung X bestehen die folgenden Verhältnisse:

$$(1) \qquad E = C + D$$

$$(2) \qquad E = F - 2A$$

Hier ist die thermische Expansion in axialer Richtung X

$$(3) \qquad \Delta E = \Delta F - 2 * \Delta A$$

Allgemein wird das Material und die Länge des Zugankers derart gewählt, das die maximale Verlängerung ΔE für alle betriebliche Zustände minimiert wird, so dass die thermischen Kräfte und Spannungen minimiert werden.

In einem speziellen Fall, wenn ΔE gleich Null ist, werden keine Kräfte in axialer Richtung auf das Fundament übertragen. In diesem Fall kompensiert die Kompensationseinheit die Verlängerung eines Moduls vollständig:

$$(4) \qquad \Delta D = - \Delta C$$

Mit anderen Worten ist die thermische Ausdehnung in axialer Richtung der Module 10a, 10b der Kapselung 3 jeweils in den Abschnitten 14F1a, 14F1b zwischen den ersten und zweiten Referenzpunkten 12a, 12b und den jeweiligen Befestigungspunkten 32a, 34a gleich der Ausdehnung des Zugankers zwischen den Befestigungspunkten 32a, 34a. D.h. ΔF = 2*ΔA bzw. ΔF1 = ΔA1 + ΔA2, falls die Entfernungen auf den ersten und zweiten Modul unterschiedlich sind.

ΔE = 0 wird erreicht, wenn die Länge und das Material der Module der Kapselung und des bzw. der Zuganker derart ausgewählt sind, dass die Gleichung

$$(5) \qquad F = A * 2 * (\alpha_A * \Delta T_A / \alpha_F * \Delta T_F)$$

erfüllt wird, wobei $\alpha_A$ der thermische Ausdehnungskoeffizient, insbesondere in axialer Richtung X, des Materials der Module der Kapselung der Sammelschiene, $\alpha_F$ der thermische Ausdehnungskoeffizient, insbesondere in axialer Richtung, des Materials der Zugankers, $\Delta T_A$ die Temperaturänderung des Moduls der Kapselung, und $\Delta T_F$ die Temperaturänderung der Kapselung des Zugankers ist.

Im Falle von einer gleichen Temperatur von Modul und Zuganker kann die Gleichung (5) vereinfacht werden:

$$(6) \qquad F = A * 2 * \alpha_A / \alpha_F$$

In Fig. 2 ist eine Querschnitts-Draufsicht einer Ausführungsform einer Schaltanlage 100 mit einer Sammelschiene 102 zu sehen. Die gleichen Merkmale sind mit den zahlenmässig um hundert erhöhten Bezugsnummern und -zeichen wie in Fig. 1 bezeichnet. Es werden daher nur auf weitere Merkmale beschrieben und für die bereits erläuterten Merkmale auf Fig. 1 und der zugehörigen Beschreibung verwiesen.

Die Module 110a, 110b, 110c der Kapselung 103 der Sammelschiene 102 sind jeweils T-förmig ausgebildet, um eine Abzweigung eines in den Modulen 110a, 110b, 110c geführten Nominalleiter 101 zu einzelnen nicht gezeigten Hochspannungsschaltern zu ermöglichen, der teilweise in Abzweigungsabschnitten 118a, 118b, 118c der Module 110a, 110b, 110c geführt wird. Die Form der Abzweigungsabschnitte 118a, 118b, 118c kann auch anders ausgestaltet werden. Dabei definiert die Mitte der rohrförmigen Abzweigungsabschnitte 118a, 118b, 118c, die jeweils senkrecht zur axialen Richtung X angeordnet sind, an der Sammelschiene 102 die Referenzpunkte 112a, 112b, 112c der Module 110a, 110b, 110c der Kapselung 103. Die Nominalleiter 101 werden durch Isolatoren 109 gehalten, die an den Enden der Modulen 110a, 110b, 110c in axialer Richtung angeordnet sind. Dadurch können auch einzelne Gasabteilungen in der gasisolierten Schaltanlage gebildet werden. In den Kompensationseinheiten 120a, 120b unter Druck befindliches Gas drückt dann auf die Isolatoren 109 und somit die in axialer Richtung die in axialer Richtung benachbarten Module 110a, 110b, 110c auseinander. In Fig. 2 sind zur Veranschaulichung nur ein erster und ein dritter Zuganker gezeigt. Der zweite Zuganker wurde in der Zeichnung weggelassen.

Die Zuganker 130a, 130b sind jeweils mit einer Mutter 140 und den Befestigungspunkten 132a, 132c, 134a befestigt. Dabei wird die Länge der Zuganker zwischen den Befestigungspunkten 132a, 132c, 134a von den Anschlagsflächen der Muttern 140 and den Befestigungspunkten bestimmt.

In einer nicht gezeigten Ausführungsform können die Zuganker oberhalb (in Bezug auf die Schwerkraft) der Kapselung der Sammelschiene mit den Modulen angeordnet werden. Die durch die Module erwärmte Luft strömt nach oben und hält die Zuganker im Wesentlichen auf der gleichen Temperatur wie die Kapselung der Module. In einer Ausführungsform können Platten zur Abstrahlung von Wärme auf der Aussenfläche der Kapselung angeordnet sein, um die Zuganker auf eine ähnliche Temperatur wie die Kapselung zu bringen. In anderen Ausführungsformen kann als Material ein Stahl mit geringen Magnetisierungsverlusten verwendet werden, um die Temperaturen von dem Zuganker und der Kapselung anzugleichen.

In einem ersten Beispiel einer Ausführungsform, wird die Veränderung des Modulabstands $\Delta E$ gleich Null gehalten. Die Länge eines Moduls ist D=1.5m. Die Länge einer Kompensationseinheit ist C=0.3m. Die Modulbreite E=1.8m.

Für die Kapselung wird ein E-Aluminium gewählt mit $\alpha_A$= 23.8E-6/K.

Für die Zuganker wird ein ferritischer Stahl mit $\alpha_F$=10.5 E-6/K gewählt.

Der Zuganker sollte zwischen dem ersten Befestigungspunkt und dem zweiten Befestigungspunkt eine axiale Länge F=3.2m aufweisen.

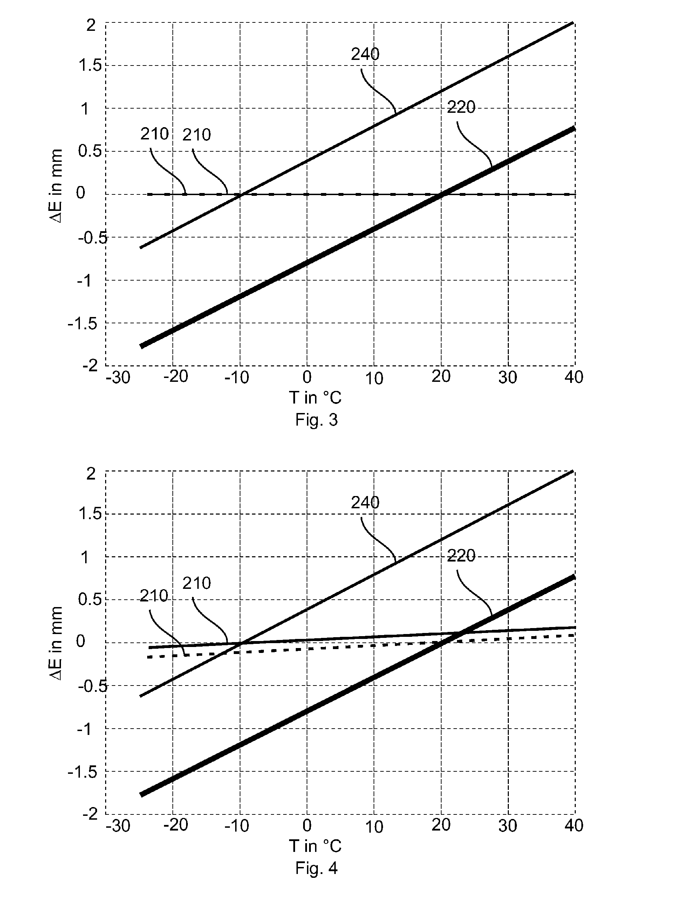

Fig. 3 zeigt für das erste Beispiel und der berechneten Zugankerlänge F=3.2m den Vergleich der thermischen Expansion entsprechend der Erfindung (Linie 210, fett gestrichelt) und im Stand der Technik (220), wo ein Zuganker an beiden Enden einer Kompensationseinheit befestigt ist. In der Abzissenachse ist die Umgebungstemperatur T angeordnet und in der Ordinatenachse die Veränderung des Modulabstands $\Delta E$. Bei den Graphen wurde berücksichtigt, dass die Zuganker bei einer Umgebungstemperatur T von 20°C an den Modulen der Kapselung bzw. Kompensationseinheiten befestigt worden ist. Daher schneidet die Linie 220 bei 20°C den Nullpunkt, bzw. die Ausdehnung beziehungsweise Veränderung des Modulabstands $\Delta E$ ist Null bei 20°C.

Ferner sind in dem Graphen die Ausdehnung der Modulabstands $\Delta E$ bei Betrieb der Module zu entnehmen, d.h. wenn ein maximal zulässiger Strom durch die Module fließt. Dies führt zu einer Erwärmung von ungefähr 30K. Die thermische Expansion gemäß einer Ausführung der Erfindung bleibt stetig Null (siehe Linie 230), wohingegen im Stand der Technik schon bei 20°C die thermische Expansion über 1mm ist (siehe Linie 240).

Somit kann der Fig. 3 entnommen werden dass der Modulabstand bei erfindungsgemäßen Ausführungsformen im Wesentlichen konstant bleibt bei, d.h. das die Verlängerung des Moduls in axialer Richtung durch die axiale Ausdehnung des Zugankers ausgeglichen worden ist.

Die Länge des Zugankers F zwischen den ersten und dem zweiten Befestigungspunkten ist größer als der Modulabstand, bzw. der Entfernung zwischen den ortsfest zu haltenden Punkten E der Module oder Sammelschienenmodule, wenn der Ausdehnungskoeffizient des Materials des Zugankers kleiner ist als der Ausdehnungskoeffizient des Materials des Moduls.

In einem zweiten Beispiel wird ein weiterer Fall erläutert. Es werden die gleichen Dimensionen wie im ersten Beispiel verwendet:

Die Länge eines Moduls der Kapselung ist D=1.5m. Die Länge einer Kompensationseinheit ist C=0.3m. Die Modulbreite E=1.8m.

Für die Kapselung wird ein E-Aluminium gewählt mit $\alpha_A$= 23.8E-6/K.

Für die Zuganker wird ein Stahl mit $\alpha_F$=12.5 E-6/K gewählt.

Mit den gegebenen Dimensionen ist eine vollständige Kompensation nicht möglich. Dennoch ist mit derselben Zugankerlänge (F=3.2m) eine signifikante und ausreichende Reduktion der thermischen Expansion des Modulabstands erreicht, wie in Fig. 4 gezeigt wird. Die gleichen Graphen sind mit den gleichen Bezugsziffern wie in Fig. 3 bezeichnet.

Die Linien 210 und 220 schneiden bei 20°C den Nullpunkt, da die Zuganker bei 20°C auf die Module der Kapselung montiert werden.

Fig. 4 zeigt für das zweite Beispiel und der berechneten Zugankerlänge F=3.2m den Vergleich der thermischen Expansion entsprechend der Erfindung (Linie 210, fett gestrichelt) und im Stand der Technik (220), wo ein Zuganker an beiden Enden einer Kompensationseinheit befestigt ist. In der Abzissenachse ist die Umgebungstemperatur T angeordnet und in der Ordinatenachse die Veränderung des Modulabstands $\Delta E$. Bei den Graphen wurde berücksichtigt, dass die Zuganker bei einer Umgebungstemperatur von 20°C an den Sammelschienenmodulen bzw. Kompensationseinheiten befestigt worden ist. Daher schneidet die Linie 220 bei 20°C den Nullpunkt, bzw. die Ausdehnung des Modulabstands $\Delta E$ ist Null bei 20°C.

Ferner sind in dem Graphen die Ausdehnung der Modulabstands bei Betrieb der Module zu entnehmen, d.h. wenn ein maximal zulässiger Strom durch die Module fließt. Dies führt zu einer Erwärmung von ungefähr 30K. Die thermische Expansion gemäß einer Ausführung der Erfindung bleibt stetig kleiner als 0.5mm (siehe Linie 230), wohingegen im Stand der Technik schon bei 20°C die thermische Expansion über 1mm ist (siehe Linie 240).

Mit anderen Worten es ist durch Auswahl der Materialen der Zuganker und der Kapselung und durch die richtige Wahl der Befestigungspunkte möglich, die thermische Ausdehnung der Module der Kapselung bei einer linearen Ausbildung einer Sammelschiene derart auszugleichen, dass der Modulabstand im Wesentlichen gleich bleibt.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

**Bezugszeichenliste**

| | |
|---|---|
| 1 | Schaltanlage |
| 2 | Sammelschiene |
| 3 | Kapselung |
| 5 | Fundament |
| 8 | Verbindungsebenen |
| 10a, 10b, 10c | Modul |
| 12a, 12b, 12c | Referenzpunkt |
| 14F1a, 14F1b | Abschnitt |
| 14F2a, 14F2b | Abschnitt |
| 16 | Flansch |
| 20a, 20b | Kompensationseinheit |
| 26 | Flansch |
| 30a,30b,30c | Zuganker |
| 32a, 32b, 32c | erster Befestigungspunkt |
| 34a, 34b | zweiter Befestigungspunkt |
| 36a, 36b, 36c | erstes Ende |
| 38a, 38b | zweites Ende |
| 100 | Schaltanlage |
| 101 | Nominalleiter |
| 102 | Sammelschiene |
| 103 | Kapselung |
| 108 | Verbindungsebene |
| 109 | Isolator |
| 110a, 110b, 110c | Modul |

| | |
|---|---|
| 112a, 112b, 112c | Referenzpunkt |
| 114F1a, 114F1b | Abschnitt |
| 116 | Flansch |
| 118a, 118b, 118c | Abzweigungsabschnitt |
| 120a, 120b | Kompensationseinheit |
| 126 | Flansch |
| 130a, 130c | Zuganker |
| 132a, 132c | erster Befestigungspunkt |
| 134a | zweiter Befestigungspunkt |
| 136a, 136c | erstes Ende |
| 138a | zweites Ende |
| 140 | Befestigungsmutter |
| A1, A2, A3, A4 | Axiale Entfernung zwischen Referenzpunkt und Befestigungspunkt |
| B1, B2 | Abschnittslänge |
| C | Kompensationseinheitslänge |
| D | Modullänge |
| E1, E2 | Modulabstand |
| F1, F2 | Effektive Zugankerlänge |
| T | Umgebungstemperatur |
| X | Achse |

**Patentansprüche**

1. Gasisolierte Schaltanlage (1) mit mindestens einer Sammelschiene (2, 102) zur Übertragung einer elektrischen Primärleistung, wobei die Sammelschiene eine axiale Richtung (X) definiert und eine mindestens einen Nominalleiter (101) umgebende Kapselung (3, 103) umfasst, wobei die mindestens eine Kapselung aufweist:

   mindestens ein Paar von axial benachbarten Modulen (10a, 10b, 10c, 110a, 110b, 110c), wobei das erste Modul des Paars von axial benachbarten Modulen einen ersten Referenzpunkt (12a, 12b, 12c, 112a, 112b, 112c) in axialer Richtung aufweist und das zweite Modul des Paars von axial benachbarten Modulen einen zweiten Referenzpunkt (12a, 12b, 12c, 112a, 112b, 112c) in axialer Richtung aufweist; und
   eine jeweils zwischen den Modulen eines Paars von axial benachbarten Modulen angeordnete Kompensationseinheit (20a, 20b, 20c, 120a, 120b, 120c);
   mindestens einen Modulabstand (E1, E2), der durch die axiale Entfernung zwischen dem ersten Referenzpunkt und dem zweiten Referenzpunkt des jeweiligen Paars von axial benachbarten Modulen definiert wird; und
   mindestens einen dem Paar von axial benachbarten Modulen zugeordneten, sich in axialer Richtung erstreckenden Zuganker (30a, 30b, 30c, 130a, 130b, 130c), der an einem ersten Befestigungspunkt (32a, 32b, 32c, 132a, 132c) an dem ersten Modul und an einem zweiten Befestigungspunkt (34a, 34b, 134a) an dem zweiten Modul befestigt ist, wobei

sich eine thermische Veränderung einer Länge (F1, F2) in axialer Richtung des mindestens einen Zugankers zwischen dem ersten Befestigungspunkt (32a, 32b, 32c, 132a, 132c) und dem zweiten Befestigungspunkt (34a, 34b, 134a), eine thermische Veränderung in axialer Richtung der Entfernung (A, A1, A3) zwischen dem ersten Befestigungspunkt (32a, 32b, 32c, 132a, 132c) des ersten Moduls (10a, 10b, 110a) und dem ersten Referenzpunkt (12a, 12b, 112a), und eine thermische Veränderung in axialer Richtung der Entfernung (A, A2, A4) zwischen dem zweiten Befestigungspunkt (34a, 34b, 134a) des zweiten Moduls (10b, 10c, 110b) und dem zweiten Referenzpunkt (12b, 12c, 112a) sich zumindest teilweise ausgleichen, so dass sich der Modulabstand bei einer Erwärmung oder Abkühlung der Kapselung sich weniger als um einen vorbestimmten Betrag in axialer Richtung verändert..

2. Gasisolierte Schaltanlage nach Anspruch 1, wobei
die Länge (F1, F2) des mindestens einen dem Paar zugeordneten Zugankers in axialer Richtung zwischen dem ersten und dem zweiten Befestigungspunkt größer als der Modulabstand (E1, E2) des Paars ist.

3. Gasisolierte Schaltanlage nach einem der vorangehenden Ansprüche, wobei bei einem Temperaturunterschied von 50° Celsius sich der Modulabstand weniger als 1% verändert, insbesondere weniger als 0,5% verändert.

4. Gasisolierte Schaltanlage nach einem der vorangehenden Ansprüche, wobei das mindestens eine zur thermischen Ausdehnung in axialer Richtung beitragende Material der Kapselung (3, 103) und das mindestens eine zur thermischen Ausdehnung in axialer Richtung beitragende Material des Zugankers (30a, 30b, 30c, 130a, 130b, 130c) derart ausgewählt sind, dass bei einer Erwärmung der Kapselung und des Zugankers von 50° Celsius sich der Modulabstand (E, E1, E2) weniger als 1% verändert, insbesondere weniger als 0,5% verändert.

5. Gasisolierte Schaltanlage nach einem der vorangehenden Ansprüche, wobei sich eine thermische Ausdehnung in axialer Richtung der Kapselung (3, 103) zwischen dem ersten Referenzpunkt (12a, 12b, 12c, 112a, 112b, 112c) und ersten Befestigungspunkt und zwischen dem zweiten Referenzpunkt und dem zweiten Befestigungspunkt (32a, 32b, 32c, 34a, 34b, 132a, 132c, 134a) und eine thermische Ausdehnung in axialer Richtung des mindestens einen Zugankers zwischen dem ersten und zweiten Befestigungspunkten derart ausgleichen, dass bei einer Erwärmung von 50° Celsius sich der Modulabstand weniger als 1% verändert, insbesondere weniger als 0,5% verändert.

6. Gasisolierte Schaltanlage nach einem der vorangehenden Ansprüche, wobei die Module des Paars jeweils einen von ihrem Referenzpunkt aus auf der Kompensationseinheit (20a, 20b, 20c) abgewandten axialen Abschnitt (14F1a, 14F1b, 14F2a, 14F2b) aufweisen, wobei der mindestens eine Zuganker jeweils an dem axialen Abschnitt oder am Referenzpunkt an einem Befestigungspunkt befestigt ist.

7. Gasisolierte Schaltanlage nach einem der vorangehenden Ansprüche, wobei der mindestens eine Zuganker (30a, 30b, 130a, 130b) außerhalb des Gasraums der ersten und des zweiten Moduls des Paars von axial benachbarten Modulen angeordnet ist.

8. Gasisolierte Schaltanlage nach einem der vorangehenden Ansprüche, wobei mindestens einer der Befestigungspunkte (32a, 32b, 32c, 34a, 34b, 132a, 132c, 134a) an einem axialen Ende des jeweiligen Moduls der Kapselung angeordnet ist.

9. Gasisolierte Schaltanlage nach einem der vorangehenden Ansprüche, wobei der Abstand (A1) zwischen dem ersten Befestigungspunkt (32a, 32b, 32c, 132a, 132c) und dem ersten Referenzpunkt (12a, 12b, 112a) des ersten Moduls und der Abstand (A2) zwischen zweiten Befestigungspunkt (34a, 34b, 134a) und dem zweiten Referenzpunkt (12b, 12c, 112b) des zweiten Moduls gleich ist.

10. Gasisolierte Schaltanlage nach einem der vorangehenden Ansprüche, wobei die Module (10a, 10b, 10c, 110a, 110b, 110c) im Bereich Referenzpunkten (12a ,12b, 12c, 112a, 112b, 112c) mit einem Fundament (5) ortsfest verbunden sind.

11. Gasisolierte Schaltanlage nach einem der vorangehenden Ansprüche, wobei die Module (10a, 10b, 10c, 110a, 110b, 110c) mindestens einen Schalter beinhalten.

12. Gasisolierte Schaltanlage nach einem der vorangehenden Ansprüche, wobei das Gas in den mindestens zwei Modulen und/oder der Kompensationseinheit einen Druck von mehr als 2,5 bar, insbesondere mehr als 4 bar bei 20°C aufweist.

13. Gasisolierte Schaltanlage nach einem der vorangehenden Ansprüche, wobei in den ersten und/oder zweiten Modul der Kapselung Aluminium zur Veränderung der Länge in axialer Richtung beiträgt.

14. Gasisolierte Schaltanlage nach einem der vorangehenden Ansprüche, wobei der mindestens einen Zuganker (30a, 30b, 30c, 130a, 130b, 130c) zumindest teilweise in Kompositbauweise ausgeführt ist, wobei ein Kompositabschnitt zur Kompensation der thermischen Veränderung der Länge in axialer Richtung beiträgt.

15. Gasisolierte Schaltanlage nach einem der vorangehenden Ansprüche, wobei in dem mindestens einen Zuganker (30a, 30b, 30c, 130a, 130b, 130c) Stahl zur Kompensation der thermischen Veränderung der Länge in axialer Richtung beiträgt.

16. Gasisolierte Schaltanlage nach einem der vorangehenden Ansprüche, wobei die mindestens eine Kompensationseinheit (20a, 20b, 20c, 120a, 120b, 120c) eine axiale thermische Längenveränderung mindestens eines von dem Referenzpunkten einander zugewandten Modulabschnitts der Module des Paars relativ zueinander ausgleicht.

17. Gasisolierte Schaltanlage, insbesondere gasisolierte Unterstation, nach einem der vorangehenden Ansprüche, mit mehr als zwei axial hintereinander angeordneten Modulen (10a, 10b, 10c, 110a, 110b, 110c), wobei jeweils zwei axial benachbarte Module ein Paar bilden.

Fig. 1

EP 2 405 549 A1

Fig. 2

Fig. 3

Fig. 4

Europäisches
Patentamt

European
Patent Office

Office européen
des brevets

**EUROPÄISCHER RECHERCHENBERICHT**

**Nummer der Anmeldung**

EP 10 16 9067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 649 658 A5 (SPRECHER & SCHUH AG) 31. Mai 1985 (1985-05-31) * das ganze Dokument * ----- | 1 | INV. H02G5/00 |
| X,D | EP 0 093 687 A1 (SIEMENS AG [DE]) 9. November 1983 (1983-11-09) * das ganze Dokument * ----- | 1 | |

RECHERCHIERTE SACHGEBIETE (IPC)

H02G

Der vorliegende Recherchenbericht wurde für alle Patentansprüche erstellt

| Recherchenort | Abschlußdatum der Recherche | Prüfer |
|---|---|---|
| Den Haag | 15. Dezember 2010 | Castagné, Olivier |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 10 16 9067

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2010

| Im Recherchenbericht angeführtes Patentdokument | Datum der Veröffentlichung | Mitglied(er) der Patentfamilie | Datum der Veröffentlichung |
|---|---|---|---|
| CH 649658 A5 | 31-05-1985 | KEINE | |
| EP 0093687 A1 | 09-11-1983 | BR 8302282 A | 03-01-1984 |
| | | CA 1199099 A1 | 07-01-1986 |
| | | DE 3217186 A1 | 10-11-1983 |
| | | JP 58204707 A | 29-11-1983 |
| | | NO 831556 A | 07-11-1983 |
| | | SU 1367873 A3 | 15-01-1988 |
| | | US 4493009 A | 08-01-1985 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007038934 A1

- EP 0093687 A1